# EUROPEAN PATENT APPLICATION

(11) **EP 4 718 139 A1**
(43) Date of publication of application: **01.04.2026**
(21) Application number: 24842782.5
(22) Date of filing: 09.04.2024
(51) Int. Cl.: G02B 26/00

(54) **FABRY-PEROT INTERFERENCE FILTER**

(30) Priority: 20.07.2023 JP 2023118089
(71) Applicant: Hamamatsu Photonics K.K., Hamamatsu-shi, Shizuoka 435-8558 (JP)
(72) Inventor: KASAHARA, Takashi, Hamamatsu-shi, Shizuoka 435-8558 (JP); OYAMA, Hiroki, Hamamatsu-shi, Shizuoka 435-8558 (JP); SHIBAYAMA, Katsumi, Hamamatsu-shi, Shizuoka 435-8558 (JP); OHTA, Takuji, Hamamatsu-shi, Shizuoka 435-8558 (JP)
(74) Representative: Boult Wade Tennant LLP
(86) International application number: PCT/JP2024/014409
(87) International publication number: WO 2025/017982

(57) **Abstract**

A Fabry-Perot interference filter includes a first laminated body having a first mirror portion, and a second laminated body having a second mirror portion that faces the first mirror portion with a gap interposed therebetween. A reference laminated body, which is one of the first laminated body and the second laminated body, includes a first low-resistance layer, a second low-resistance layer, and a first insulating layer disposed between the first low-resistance layer and the second low-resistance layer. The resistivity of the material constituting the first low-resistance layer and the second low-resistance layer is lower than the resistivity of the material constituting the first insulating layer. The first insulating layer includes a first main body portion located on the first low-resistance layer, a first covering portion covering an outer edge of the first low-resistance layer, and a first peripheral portion located outside the first low-resistance layer. The first main body portion, the first covering portion, and the first peripheral portion are integrally formed.

## Description

### Technical Field

One aspect of the present disclosure relates to a Fabry-Perot interference filter.

### Background Art

Patent Literature 1 describes a Fabry-Perot interference filter in which a first laminated body, an intermediate layer, and a second laminated body are laminated in this order on a substrate. Each of the first laminated body and the second laminated body is configured by alternately laminating a plurality of polysilicon layers and a plurality of silicon nitride layers. A part of the first laminated body and a part of the second laminated body function as a first mirror portion and a second mirror portion, respectively. In the Fabry-Perot interference filter, by adjusting a voltage applied between the first mirror portion and the second mirror portion to adjust a distance between the first mirror portion and the second mirror portion, a wavelength of light transmitted through the Fabry-Perot interference filter can be appropriately selected.

### Citation List

### Patent Literature

Patent Literature 1: International Publication No. WO 2019/098142

### Summary of Invention

### Technical Problem

When manufacturing a Fabry-Perot interference filter as described above, the first laminated body and the second laminated body are formed by, for example, etching. During the formation, a position of a resist used as a mask for etching may be displaced, and due to this, a leakage path may occur at an edge portion of the first laminated body or the second laminated body. For example, if an outer edge portion of a silicon nitride layer located between two polysilicon layers is removed more than planned, the polysilicon layers come into contact with each other at the outer edge portion, and a leakage path may occur between the polysilicon layers. Alternatively, even when an outer edge portion of a polysilicon layer is formed to extend outward than planned and the outer edge portion of the polysilicon layer comes into contact with an outer edge portion of a lower polysilicon layer, a leakage path can occur between the polysilicon layers. In order to accurately adjust the voltage applied between the first mirror portion and the second mirror portion and accurately adjust the distance between the first mirror portion and the second mirror portion, it is required to suppress the occurrence of such a leakage path.

An object of one aspect of the present disclosure is to provide a Fabry-Perot interference filter capable of accurately controlling the distance between the first mirror portion and the second mirror portion.

### Solution to Problem

A Fabry-Perot interference filter according to one aspect of the present disclosure is [1] "A Fabry-Perot interference filter comprising: a substrate; a first laminated body including a first mirror portion disposed on the substrate; a second laminated body including a second mirror portion that faces the first mirror portion with a gap interposed therebetween on a side opposite to the substrate with respect to the first mirror portion; and an intermediate layer that defines the gap between the first laminated body and the second laminated body, wherein a reference laminated body, which is one of the first laminated body and the second laminated body, includes: a first low-resistance layer; a second low-resistance layer disposed on a side opposite to the substrate with respect to the first low-resistance layer; and a first insulating layer disposed between the first low-resistance layer and the second low-resistance layer, the resistivity of the material constituting the first low-resistance layer and the second low-resistance layer is lower than the resistivity of the material constituting the first insulating layer, the first insulating layer includes: a first main body portion located on the first low-resistance layer; a first covering portion covering an outer edge of the first low-resistance layer; and a first peripheral portion located outside the first low-resistance layer when viewed from a direction perpendicular to the substrate, and the first main body portion, the first covering portion, and the first peripheral portion are integrally formed."

In this Fabry-Perot interference filter, in the reference laminated body, which is one of the first laminated body and the second laminated body, the first insulating layer includes the first main body portion located on the first low-resistance layer, the first covering portion covering the outer edge of the first low-resistance layer, and the first peripheral portion located outside the first low-resistance layer when viewed from a direction perpendicular to the substrate, and the first main body portion, the first covering portion, and the first peripheral portion are integrally formed. Thereby, the first covering portion and the first peripheral portion of the first insulating layer can prevent the second low-resistance layer from coming into contact with the first low-resistance layer, and the occurrence of a leakage path due to the contact between the second low-resistance layer and the first low-resistance layer can be suppressed. Therefore, according to this Fabry-Perot interference filter, the distance between the first mirror portion and the second mirror portion can be accurately adjusted.

The Fabry-Perot interference filter according to one aspect of the present disclosure may be [2] "The Fabry-Perot interference filter according to [1], wherein the reference laminated body further includes: a third low-resistance layer disposed on a substrate side with respect to the first low-resistance layer; and a second insulating layer disposed between the first low-resistance layer and the third low-resistance layer, and the resistivity of the material constituting the third low-resistance layer is lower than the resistivity of the material constituting the second insulating layer." Even with such a configuration, the distance between the first mirror portion and the second mirror portion can be accurately adjusted.

The Fabry-Perot interference filter according to one aspect of the present disclosure may be [3] "The Fabry-Perot interference filter according to [2], wherein the first covering portion covers the outer edge of the first low-resistance layer, the outer edge of the third low-resistance layer, and the outer edge of the second insulating layer." In this case, in addition to preventing the second low-resistance layer from coming into contact with the first low-resistance layer, it is possible to prevent the first low-resistance layer from coming into contact with the third low-resistance layer, and the occurrence of a leakage path can be further suppressed.

The Fabry-Perot interference filter according to one aspect of the present disclosure may be [4] "The Fabry-Perot interference filter according to [2] or [3], wherein the second low-resistance layer extends so as to cover the first covering portion of the first insulating layer." In this case, for example, as compared with a case where the second low-resistance layer is formed so as to cover only the first main body portion of the first insulating layer, a step formed on the reference laminated body can be made gentler. By making the step formed on the reference laminated body gentler, for example, it is possible to suppress the occurrence of coating unevenness when applying a resist for etching, and to improve manufacturing stability.

The Fabry-Perot interference filter according to one aspect of the present disclosure may be [5] "The Fabry-Perot interference filter according to [1], wherein the reference laminated body further includes a third insulating layer disposed on a side opposite to the substrate with respect to the second low-resistance layer, the third insulating layer includes: a second main body portion located on the second low-resistance layer; a second covering portion covering the outer edge of the second low-resistance layer; and a second peripheral portion located outside the second low-resistance layer when viewed from a direction perpendicular to the substrate, and the second main body portion, the second covering portion, and the second peripheral portion are integrally formed." In this case, for example, it is possible to prevent a low-resistance layer laminated on the second insulating layer from coming into contact with the second low-resistance layer, and the occurrence of a leakage path can be further suppressed.

The Fabry-Perot interference filter according to one aspect of the present disclosure may be [6] "The Fabry-Perot interference filter according to [5], wherein the second peripheral portion is in contact with the first peripheral portion." In this case, contact between the low-resistance layers can be more reliably prevented, and the occurrence of a leakage path can be further suppressed.

The Fabry-Perot interference filter according to one aspect of the present disclosure may be [7] "The Fabry-Perot interference filter according to [5] or [6], wherein the reference laminated body further includes a fourth low-resistance layer disposed on a side opposite to the substrate with respect to the third insulating layer." In this case, the second covering portion and the second peripheral portion of the third insulating layer can prevent the fourth low-resistance layer from coming into contact with the second low-resistance layer.

The Fabry-Perot interference filter according to one aspect of the present disclosure may be [8] "The Fabry-Perot interference filter according to any one of [1] to [7], wherein at least one of the first low-resistance layer and the second low-resistance layer is electrically connected to an electrode." In such a configuration, it is particularly important to suppress the occurrence of a leakage path between the first low-resistance layer and the second low-resistance layer, and according to this Fabry-Perot interference filter, as described above, the occurrence of a leakage path due to contact between the first low-resistance layer and the second low-resistance layer can be suppressed.

The Fabry-Perot interference filter according to one aspect of the present disclosure may be [9] "The Fabry-Perot interference filter according to any one of [1] to [8], wherein the intermediate layer includes: a third main body portion located on the first laminated body; a third covering portion covering the outer edge of the first laminated body; and a third peripheral portion located outside the first laminated body when viewed from a direction perpendicular to the substrate, and the third main body portion, the third covering portion, and the third peripheral portion are integrally formed." In this case, since the outer edge of the first laminated body is covered by the intermediate layer, peeling of the first laminated body can be suppressed.

The Fabry-Perot interference filter according to one aspect of the present disclosure may be [10] "The Fabry-Perot interference filter according to any one of [1] to [9], wherein the reference laminated body is the first laminated body, the second laminated body includes: a fourth main body portion located on the intermediate layer; a fourth covering portion covering an outer edge of the intermediate layer; and a fourth peripheral portion located outside the intermediate layer when viewed from a direction perpendicular to the substrate, and the fourth main body portion, the fourth covering portion, and the fourth peripheral portion are integrally formed." In this case, since the outer end surface of the intermediate layer is covered by the second laminated body, peeling of the first laminated body and the intermediate layer can be suppressed.

The Fabry-Perot interference filter according to one aspect of the present disclosure may be [11] "The Fabry-Perot interference filter according to any one of [1] to [10], wherein the first low-resistance layer and the second low-resistance layer are formed of polysilicon, and the first insulating layer is formed of silicon nitride." In this case, desired mirror characteristics can be achieved.

The Fabry-Perot interference filter according to one aspect of the present disclosure may be [12] "The Fabry-Perot interference filter according to any one of [1] to [11], wherein the other one of the first laminated body and the second laminated body includes: a fifth low-resistance layer; a sixth low-resistance layer disposed on a side opposite to the substrate with respect to the fifth low-resistance layer; and a fourth insulating layer disposed between the fifth low-resistance layer and the sixth low-resistance layer, the resistivity of the material constituting the fifth low-resistance layer and the sixth low-resistance layer is lower than the resistivity of the material constituting the fourth insulating layer, the fourth insulating layer includes: a fifth main body portion located on the fifth low-resistance layer; a fifth covering portion covering an outer edge of the fifth low-resistance layer; and a fifth peripheral portion located outside the fifth low-resistance layer when viewed from a direction perpendicular to the substrate, and the fifth main body portion, the fifth covering portion, and the fifth peripheral portion are integrally formed." In this case, the fifth covering portion and the fifth peripheral portion of the fourth insulating layer can prevent the sixth low-resistance layer from coming into contact with the fifth low-resistance layer, and the occurrence of a leakage path due to the contact between the sixth low-resistance layer and the fifth low-resistance layer can be suppressed.

The Fabry-Perot interference filter according to one aspect of the present disclosure may be [13] "The Fabry-Perot interference filter according to any one of [1] to [12], wherein the reference laminated body is the first laminated body." In this case, the occurrence of a leakage path in the first laminated body can be suppressed.

The Fabry-Perot interference filter according to one aspect of the present disclosure may be [14] "The Fabry-Perot interference filter according to any one of [1] to [12], wherein the reference laminated body is the second laminated body." In this case, the occurrence of a leakage path in the second laminated body can be suppressed.

### Advantageous Effects of Invention

According to one aspect of the present disclosure, it is possible to provide a Fabry-Perot interference filter capable of accurately controlling the distance between the first mirror portion and the second mirror portion.

### Brief Description of Drawings

FIG. 1 is a plan view of a Fabry-Perot interference filter according to an embodiment.
FIG. 2 is a bottom view of a Fabry-Perot interference filter.
FIG. 3 is a cross-sectional view taken along the line III-III of FIG. 1.
FIG. 4 is an enlarged cross-sectional view showing a part of the Fabry-Perot interference filter.
FIG. 5 is a cross-sectional view of a Fabry-Perot interference filter according to a first modification.
FIG. 6 is a cross-sectional view of a Fabry-Perot interference filter according to a second modification.
FIG. 7 is a cross-sectional view of a Fabry-Perot interference filter according to a third modification.

### Description of Embodiments

Hereinafter, an embodiment of one aspect of the present disclosure will be described in detail with reference to the drawings. In the following description, the same or equivalent elements are denoted by the same reference numerals, and redundant description thereof will be omitted.

### [Configuration of Fabry-Perot Interference Filter]

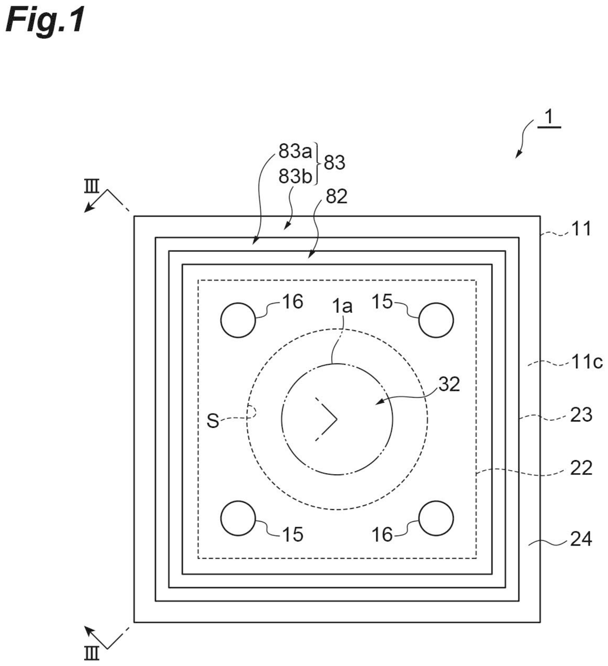

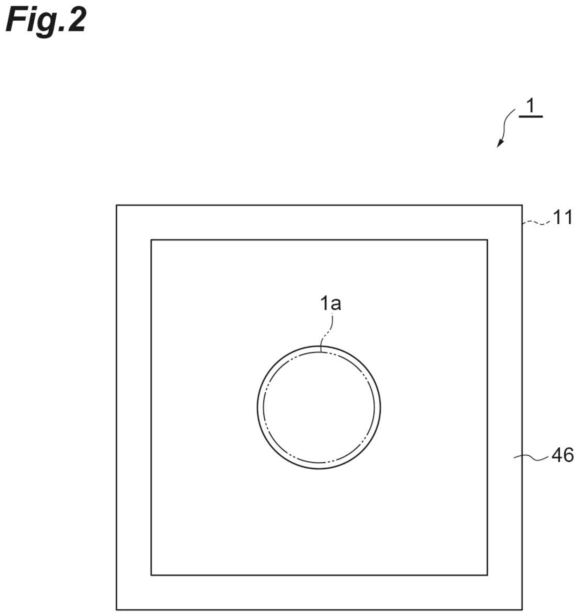

As illustrated in FIGS. 1 to 3, a Fabry-Perot interference filter 1 includes a substrate 11. The substrate 11 has a first surface 11a and a second surface 11b on a side opposite to the first surface 11a. On the first surface 11a, an antireflection layer 21, a first laminated body 22 (reference laminated body), an intermediate layer 23, and a second laminated body 24 are laminated in this order. Between the first laminated body 22 and the second laminated body 24, a gap (in other words, an air gap) S is defined by a frame-shaped intermediate layer 23.

The shape and positional relationship of each part when viewed from a direction perpendicular to the first surface 11a (in other words, in a plan view) are as follows. The outer edge of the substrate 11 has, for example, a rectangular shape with a side length of about several hundred µm to several tens of mm. The outer edge of the substrate 11 and the outer edge of the second laminated body 24 coincide with each other. The outer edge of the antireflection layer 21 and the outer edge of the first laminated body 22 coincide with each other. The outer edge of the intermediate layer 23 is located outside the outer edges of the antireflection layer 21 and the first laminated body 22 (in other words, on a side opposite to the center of the gap S), and inside the outer edges of the substrate 11 and the second laminated body 24 (in other words, on the center side of the gap S). That is, the substrate 11 has an outer edge portion 11c located outside the outer edge of the intermediate layer 23. The outer edge portion 11c is, for example, frame-shaped and surrounds the intermediate layer 23 in a plan view. The gap S has, for example, a circular shape. Note that the outer edge of the antireflection layer 21 may be located outside the outer edge of the intermediate layer 23, or the outer edge of the antireflection layer 21 and the outer edge of the intermediate layer 23 may coincide with each other. The antireflection layer 21 and the intermediate layer 23 may be integrated with each other.

The Fabry-Perot interference filter 1 transmits light having a predetermined wavelength in a light transmissive region 1a defined in its central portion. The light transmissive region 1a is, for example, a cylindrical region. The substrate 11 is, for example, made of silicon, quartz, glass, or the like. When the substrate 11 is made of silicon, the antireflection layer 21 and the intermediate layer 23 are, for example, made of silicon oxide. The intermediate layer 23 has an insulating property. The thickness of the intermediate layer 23 is, for example, several tens of nm to several tens of µm.

A portion of the first laminated body 22 corresponding to the light transmissive region 1a (for example, a portion overlapping the gap S in a plan view) functions as a first mirror portion 31. The first mirror portion 31 is a fixed mirror. The first mirror portion 31 is disposed on the first surface 11a via the antireflection layer 21. The first laminated body 22 is formed, for example, by alternately laminating a plurality of polysilicon layers 50 and a plurality of silicon nitride layers 60 one by one. In the Fabry-Perot interference filter 1, a polysilicon layer 51, a silicon nitride layer 61, a polysilicon layer 52, a silicon nitride layer 62, and a polysilicon layer 53 are laminated on the antireflection layer 21 in this order. The optical thickness of each of the polysilicon layers 50 and the silicon nitride layers 60 constituting the first mirror portion 31 is preferably an integer multiple of 1/4 of the center transmission wavelength. The first mirror portion 31 may be disposed directly on the first surface 11a without the antireflection layer 21 interposed therebetween.

A portion of the second laminated body 24 corresponding to the light transmissive region 1a (for example, a portion overlapping the gap S in a plan view) functions as a second mirror portion 32. The second mirror portion 32 is a movable mirror. The second mirror portion 32 faces the first mirror portion 31 with the gap S interposed therebetween on a side opposite to the substrate 11 with respect to the first mirror portion 31. The direction in which the first mirror portion 31 and the second mirror portion 32 face each other is perpendicular to the first surface 11a. The second laminated body 24 is disposed on the first surface 11a via the antireflection layer 21, the first laminated body 22, and the intermediate layer 23. The second laminated body 24 is configured, for example, by alternately laminating a plurality of polysilicon layers 50 and a plurality of silicon nitride layers 60 one by one. In the Fabry-Perot interference filter 1, a polysilicon layer 54, a silicon nitride layer 64, a polysilicon layer 55, a silicon nitride layer 65, and a polysilicon layer 56 are laminated on the intermediate layer 23 in this order. The optical thickness of each of the polysilicon layers 50 and the silicon nitride layers 60 constituting the second mirror portion 32 is preferably an integer multiple of 1/4 of the center transmission wavelength. The thickness of the first laminated body 22 and the second laminated body 24 is, for example, about 1 µm, and the thickness of each of the polysilicon layers 50 and the silicon nitride layers 60 constituting the first laminated body 22 and the second laminated body 24 is, for example, about 0.01 µm to 0.5 µm.

The polysilicon layer 50 is a low-resistance layer, and the silicon nitride layer 60 is an insulating layer. The resistivity of the material constituting the low-resistance layer (polysilicon layer 50) is lower than the resistivity of the material constituting the insulating layer (silicon nitride layer 60). In this example, the resistivity of the polysilicon constituting the polysilicon layer 50 is about 1.0×10⁵ Ωcm to 1.0×10⁶ Ωcm, and the resistivity of the silicon nitride constituting the silicon nitride layer 60 is equal to or greater than 1.0×10⁸ Ωcm. Note that, as will be described later, in this example, electrode portions (a driving electrode 12, a compensation electrode 13, and a driving electrode 14) are formed by doping the polysilicon layer 50 with impurities to partially lower its resistance. However, as described above, even in a state before the resistance is lowered, the resistivity of the polysilicon layer 50 is lower than the resistivity of the silicon nitride layer 60.

In a portion of the second laminated body 24 corresponding to the gap S (for example, a portion overlapping the gap S in a plan view), a plurality of through holes (not shown) are formed. These through holes extend from the surface 24a of the second laminated body 24 on a side opposite to the intermediate layer 23 to the gap S. These through holes are formed to such an extent that they do not substantially affect the function of the second mirror portion 32. These through holes are used, for example, to form the gap S by removing a part of the intermediate layer 23 by etching.

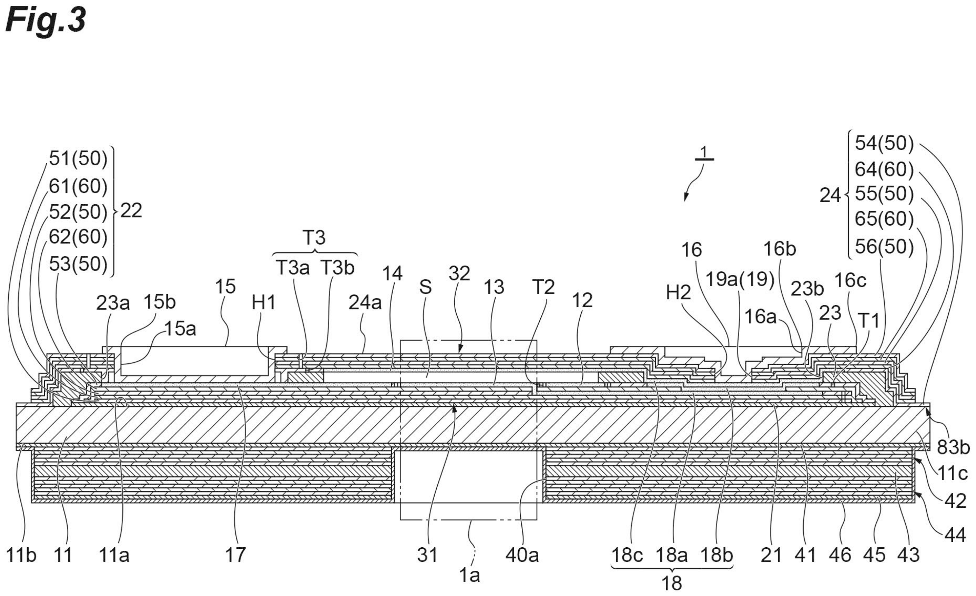

As shown in FIG. 3, a driving electrode 12 and a compensation electrode 13 are provided in the first mirror portion 31. The driving electrode 12 has, for example, an annular shape in a plan view and surrounds the light transmissive region 1a. The driving electrode 12 is formed, for example, in the polysilicon layer 53 constituting the first laminated body 22. The polysilicon layer 53 is a layer in contact with the intermediate layer 23 among the layers constituting the first laminated body 22, in other words, a layer located on the farthest side from the substrate 11. The driving electrode 12 is formed, for example, by doping the polysilicon layer 53 with impurities to lower its resistance.

The compensation electrode 13 has, for example, a circular shape in a plan view and overlaps with the light transmissive region 1a. The size of the compensation electrode 13 may be a size that includes the entire light transmissive region 1a, but may be substantially the same as the size of the light transmissive region 1a. The compensation electrode 13 is formed in the polysilicon layer 53 in which the driving electrode 12 is formed. The compensation electrode 13 is formed, for example, by doping the polysilicon layer 53 with impurities to lower its resistance.

A driving electrode 14 is provided in the second mirror portion 32. The driving electrode 14 has, for example, a circular shape in a plan view and faces the driving electrode 12 and the compensation electrode 13 with the gap S interposed therebetween. The driving electrode 14 is formed, for example, in the polysilicon layer 54 constituting the second laminated body 24. The polysilicon layer 54 is a layer in contact with the intermediate layer 23 among the layers constituting the second laminated body 24, in other words, a layer located on the side closest to the substrate 11. The driving electrode 14 is formed, for example, by doping the polysilicon layer 54 with impurities to lower its resistance.

The Fabry-Perot interference filter 1 further includes a pair of terminals 15 and a pair of terminals 16. The terminals 15 and 16 are provided outside the light transmissive region 1a in a plan view. The terminals 15 and 16 are formed, for example, of a metal film such as aluminum or an alloy thereof. The terminals 15 face each other with the light transmissive region 1a interposed therebetween, and the terminals 16 face each other with the light transmissive region 1a interposed therebetween. The direction in which the terminals 15 face each other is orthogonal to the direction in which the terminals 16 face each other (see FIG. 1).

The terminal 15 is disposed in the through hole H1 extending from the surface 24a of the second laminated body 24 to the first laminated body 22. The terminal 15 is electrically connected to the driving electrode 12 via a wiring portion 17. The wiring portion 17 is formed in the polysilicon layer 53. The polysilicon layer 53 is electrically connected to the driving electrode 12 via the wiring portion 17. The wiring portion 17 is formed, for example, by doping the polysilicon layer 53 with impurities to lower its resistance. The terminal 15 has an opening 15a that opens on a side opposite to the substrate 11. The intermediate layer 23 has an inner side surface 23a that defines the through hole H1. An opening edge 15b of the opening 15a is located further inward than the inner side surface 23a over the entire circumference (in other words, at any position on the opening edge 15b) in a plan view.

The terminal 16 is disposed in a through hole H2 extending from the surface 24a of the second laminated body 24 to the inside of the intermediate layer 23. The terminal 16 is electrically connected to the compensation electrode 13 and the driving electrode 14 via a wiring portion 18. As a result, the compensation electrode 13 has the same potential as the driving electrode 14 when the Fabry-Perot interference filter 1 is driven. The wiring portion 18 includes, for example, a wiring portion 18a formed in the polysilicon layer 52, a wiring portion 18b formed in the polysilicon layer 53, and a wiring portion 18c formed in the polysilicon layer 54. The wiring portion 18a is electrically connected to the compensation electrode 13. The polysilicon layer 52 is electrically connected to the compensation electrode 13 and the driving electrode 14 via the wiring portion 18a. The wiring portion 18c is electrically connected to the driving electrode 14. The wiring portion 18b is in contact with the wiring portions 18a and 18c, and the wiring portions 18a to 18c are electrically connected to each other. The wiring portions 18a to 18c are respectively formed, for example, by doping the polysilicon layer 52, 53, or 54 with impurities to lower its resistance when the polysilicon layers 52, 53, and 54 are polysilicon layers. The terminal 16 has an opening 16a that opens on a side opposite to the substrate 11. The intermediate layer 23 has an inner side surface 23b that defines the through hole H2. An opening edge 16b of the opening 16a is located further inward than the inner side surface 23b over the entire circumference (in other words, at any position on the opening edge 16b) in a plan view. An outer edge 16c of the terminal 16 is located outside the inner side surface 23b over the entire circumference in a plan view.

A trench T1 and a trench T2 are provided in the first laminated body 22. The trench T1 is formed in the polysilicon layer 53 and extends annularly so as to surround a connection portion of the wiring portion 18 with the terminal 16. The trench T1 electrically insulates the driving electrode 12 and the wiring portion 18. The trench T2 is formed in the polysilicon layer 53 and extends annularly along the boundary between the driving electrode 12 and the compensation electrode 13. The trench T2 electrically insulates the driving electrode 12 from a region inside the driving electrode 12 (that is, the compensation electrode 13). The driving electrode 12 and the compensation electrode 13 are electrically insulated by the trenches T1 and T2. A region in each of the trenches T1 and T2 may be an insulating material or may be an air gap..

A trench T3 is provided in the second laminated body 24. The trench T3 has a first portion T3a and a second portion T3b. The first portion T3a is continuously formed over the polysilicon layers 55, 56 and the silicon nitride layers 64, 65, and extends annularly so as to surround the terminal 15. The second portion T3b is formed in the polysilicon layer 54 and extends annularly so as to surround the terminal 15. The second portion T3b is separated from the first portion T3a. The second portion T3b is located outside the first portion T3a over the entire circumference in a plan view. The trench T3 electrically insulates the terminal 15 from the driving electrode 14. The region in the trench T3 may be an insulating material or may be an air gap.

On the second surface 11b of the substrate 11, an antireflection layer 41, a third laminated body 42, an intermediate layer 43, and a fourth laminated body 44 are laminated in this order. The antireflection layer 41 and the intermediate layer 43 have the same configurations as the antireflection layer 21 and the intermediate layer 23, respectively. The third laminated body 42 and the fourth laminated body 44 have laminated structures symmetrical to the first laminated body 22 and the second laminated body 24 with respect to the substrate 11, respectively. The antireflection layer 41, the third laminated body 42, the intermediate layer 43, and the fourth laminated body 44 have a function of suppressing warpage of the substrate 11.

The third laminated body 42, the intermediate layer 43, and the fourth laminated body 44 are thinned along the outer edge of the outer edge portion 11c. That is, portions of the third laminated body 42, the intermediate layer 43, and the fourth laminated body 44 along the outer edge of the outer edge portion 11c is thinner than the other portions of the third laminated body 42, the intermediate layer 43, and the fourth laminated body 44 excluding the portions along the outer edge. In the Fabry-Perot interference filter 1, the third laminated body 42, the intermediate layer 43, and the fourth laminated body 44 are made thin by removing all of the third laminated body 42, the intermediate layer 43, and the fourth laminated body 44 in a portion overlapping a thinned portion 83b, which will be described later, in a plan view.

In the third laminated body 42, the intermediate layer 43, and the fourth laminated body 44, an opening 40a is provided so as to overlap with the light transmissive region 1a in a plan view. The opening 40a has a diameter substantially the same as the size of the light transmissive region 1a. The opening 40a opens to a light emission side. A bottom surface of the opening 40a reaches the antireflection layer 41.

On a surface of the fourth laminated body 44 on the light emission side, a light shielding layer 45 is formed. The light shielding layer 45 is, for example, made of a metal film such as aluminum or an alloy thereof. On a surface of the light shielding layer 45 and an inner surface of the opening 40a, a protective layer 46 is formed. The protective layer 46 covers outer edges of the third laminated body 42, the intermediate layer 43, the fourth laminated body 44, and the light shielding layer 45, and also covers the antireflection layer 41 on the outer edge portion 11c. The protective layer 46 is, for example, made of aluminum oxide. Note that by setting the thickness of the protective layer 46 to 1 nm to 100 nm (preferably about 30 nm), the optical influence of the protective layer 46 can be ignored.

In the Fabry-Perot interference filter 1 configured as described above, when a voltage is applied between the driving electrodes 12 and 14 via the terminals 15 and 16, an electrostatic force corresponding to the voltage is generated between the driving electrodes 12 and 14. By the electrostatic force, the second mirror portion 32 is attracted toward the first mirror portion 31 fixed to the substrate 11, and the distance between the first mirror portion 31 and the second mirror portion 32 is adjusted. Thus, in the Fabry-Perot interference filter 1, the distance between the first mirror portion 31 and the second mirror portion 32 is variable.

The wavelength of light transmitted through the Fabry-Perot interference filter 1 depends on the distance between the first mirror portion 31 and the second mirror portion 32 in the light transmissive region 1a. Therefore, by adjusting the voltage applied between the driving electrodes 12 and 14, the wavelength of transmitted light can be appropriately selected. Here, the compensation electrode 13 has the same potential as the driving electrode 14. Therefore, the compensation electrode 13 functions to keep the first mirror portion 31 and the second mirror portion 32 flat in the light transmissive region 1a.

In the Fabry-Perot interference filter 1, for example, a spectroscopic spectrum can be obtained by detecting light transmitted through the light transmissive region 1a of the Fabry-Perot interference filter 1 with a photodetector while changing the voltage applied to the Fabry-Perot interference filter 1 (that is, while changing the distance between the first mirror portion 31 and the second mirror portion 32).

### [Detailed Configuration of Each Part]

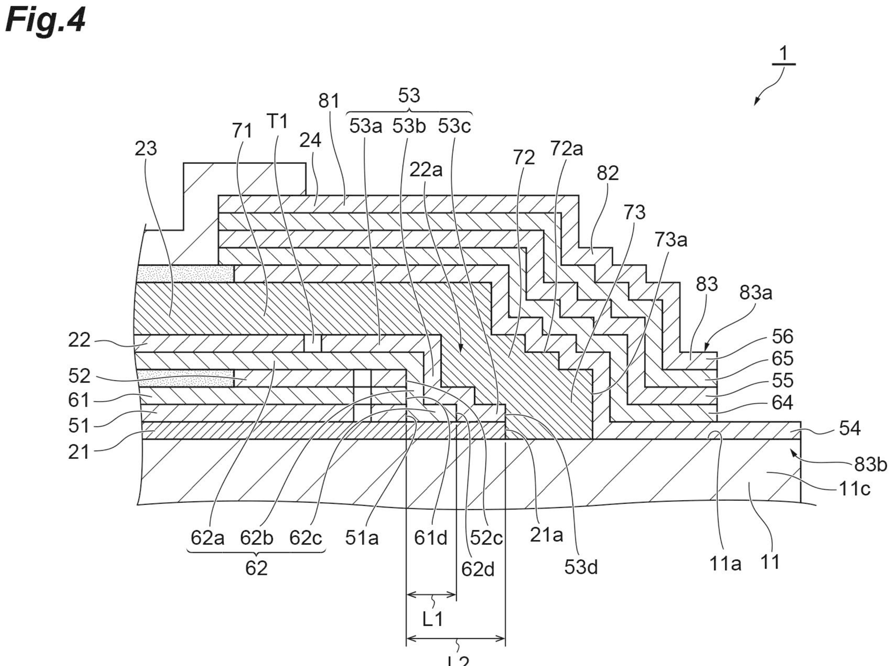

FIG. 4 is an enlarged cross-sectional view showing a part of the Fabry-Perot interference filter. Hereinafter, a side on which the first laminated body 22 is located with respect to the substrate 11 (the upper side in FIG. 4) will be referred to as an upper side, and a side on which the substrate 11 is located with respect to the first laminated body 22 (the lower side in FIG. 4) will be referred to as a lower side, but these terms do not limit a usage mode of the Fabry-Perot interference filter 1. For example, the Fabry-Perot interference filter 1 may be used in a state where the first laminated body 22 is located vertically below the substrate 11.

As shown in FIG. 4, in the first laminated body 22, a polysilicon layer 51 (third low-resistance layer), a silicon nitride layer 61 (second insulating layer), a polysilicon layer 52 (first low-resistance layer), a silicon nitride layer 62 (first insulating layer), and a polysilicon layer 53 (second low-resistance layer) are disposed on the first surface 11a of the substrate 11 in this order from the lower side. That is, the polysilicon layer 51 (third low-resistance layer) is disposed on a lower side with respect to the polysilicon layer 52 (first low-resistance layer), and the polysilicon layer 53 (second low-resistance layer) is disposed on an upper side with respect to the polysilicon layer 52. The silicon nitride layer 61 (second insulating layer) is disposed between the polysilicon layer 51 and the polysilicon layer 52, and the silicon nitride layer 62 (first insulating layer) is disposed between the polysilicon layer 52 and the polysilicon layer 53.

The silicon nitride layer 62 has a main body portion 62a (first main body portion), a covering portion 62b (first covering portion), and a peripheral portion 62c (first peripheral portion). The main body portion 62a, the covering portion 62b, and the peripheral portion 62c are integrally formed so as to be continuous with each other. The main body portion 62a is located on the polysilicon layer 52 and overlaps with the entire polysilicon layer 52 in a plan view. The covering portion 62b is continuous with the main body portion 62a on an outer edge 52c of the polysilicon layer 52. The covering portion 62b covers the outer edge 52c of the polysilicon layer 52, an outer edge 61d of the silicon nitride layer 61, and an outer edge 51a of the polysilicon layer 51, and reaches the antireflection layer 21. The peripheral portion 62c is continuous with an end portion of the covering portion 62b on the substrate 11 side, and extends outward from the covering portion 62b along the first surface 11a of the substrate 11 (in other words, on a side opposite to the center of the gap S). The peripheral portion 62c is located outside the polysilicon layer 52 in a plan view. The covering portion 62b and the peripheral portion 62c are formed in a frame shape (a rectangular frame shape in this example) so as to surround the main body portion 62a in a plan view. The width L1 of one side of the covering portion 62b and the peripheral portion 62c in a plan view is, for example, about 2 µm. The width L1 is set to, for example, about 4 to 200 times the thickness of the main body portion 62a (in this example, about 0.01 µm to 0.5 µm).

The polysilicon layer 53 has a main body portion 53a, a covering portion 53b, and a peripheral portion 53c. The main body portion 53a, the covering portion 53b, and the peripheral portion 53c are integrally formed so as to be continuous with each other. The main body portion 53a is located on the silicon nitride layer 62 and overlaps with the entire main body portion 62a of the silicon nitride layer 62 in a plan view. The covering portion 53b covers the covering portion 62b and the peripheral portion 62c of the silicon nitride layer 62, and reaches the antireflection layer 21. The peripheral portion 53c is continuous with an end portion of the covering portion 53b on the substrate 11 side, and extends outward from the covering portion 53b along the first surface 11a of the substrate 11. The peripheral portion 53c is located outside the silicon nitride layer 62 in a plan view. The covering portion 53b and the peripheral portion 53c are formed in a frame shape (a rectangular frame shape in this example) so as to surround the main body portion 53a in a plan view. The width L2 of one side of the covering portion 53b and the peripheral portion 53c in a plan view is, for example, about 4 µm. The width L2 is set to, for example, about 8 to 400 times the thickness of the main body portion 53a (in this example, about 0.01 µm to 0.5 µm). Note that a step portion 22a is formed at an outer edge portion of the first laminated body 22 by the peripheral portion 62c of the silicon nitride layer 62 and the peripheral portion 53c of the polysilicon layer 53.

The intermediate layer 23 has a defining portion 71 (third main body portion), a covering portion 72 (third covering portion), and an extending portion 73 (third peripheral portion). The defining portion 71, the covering portion 72, and the extending portion 73 are integrally formed so as to be continuous with each other. The defining portion 71 defines the gap S between the first laminated body 22 and the second laminated body 24. The defining portion 71 overlaps with the first laminated body 22 and the second laminated body 24 in a plan view. That is, the defining portion 71 is located on the first laminated body 22.

The covering portion 72 surrounds the defining portion 71 in a plan view. The covering portion 72 has, for example, a rectangular frame shape in a plan view. The covering portion 72 covers an outer edge portion 21a of the antireflection layer 21 and an outer edge portion of the first laminated body 22, and reaches the first surface 11a. That is, the covering portion 72 covers the outer edges of all the layers constituting the first laminated body 22, that is, outer edges 51a, 52c, and 53d of the polysilicon layers 51, 52, and 53, and outer edges 61d and 62d of the silicon nitride layers 61 and 62.

The extending portion 73 surrounds the covering portion 72 in a plan view. The extending portion 73 has, for example, a rectangular frame shape in a plan view. The extending portion 73 extends outward from the covering portion 72 along a direction parallel to the first surface 11a (in other words, on a side opposite to the center of the gap S). The extending portion 73 is located outside the first laminated body 22 in a plan view.

The second laminated body 24 has, in addition to the second mirror portion 32, a main body portion 81 (fourth main body portion), a covering portion 82 (fourth covering portion), and a peripheral portion 83 (fourth peripheral portion). The second mirror portion 32, the main body portion 81, the covering portion 82, and the peripheral portion 83 are integrally formed to have a part of the same laminated structure and to be continuous with each other. The second laminated body 24 extends to the outer edge of the substrate 11 so as to cover, with the covering portion 82 of the second laminated body 24, an outer end surface 72a of the covering portion 72 and an outer end surface 73a of the extending portion 73.

The main body portion 81 is located on the defining portion 71 of the intermediate layer 23 and overlaps with the entire defining portion 71 in a plan view. The covering portion 82 surrounds the main body portion 81 in a plan view. The covering portion 82 has, for example, a rectangular frame shape in a plan view. The covering portion 82 covers the outer end surface 73a of the extending portion 73.

The peripheral portion 83 surrounds the covering portion 82 in a plan view. The peripheral portion 83 is located outside the intermediate layer 23 in a plan view. The peripheral portion 83 has, for example, a rectangular frame shape in a plan view. The peripheral portion 83 is located on the first surface 11a at the outer edge portion 11c. An outer edge of the peripheral portion 83 coincides with the outer edge of the substrate 11 in a plan view. The peripheral portion 83 is thinned along the outer edge of the outer edge portion 11c. That is, a portion of the peripheral portion 83 along the outer edge of the outer edge portion 11c is thinner than other portions of the peripheral portion 83 excluding the portion along the outer edge. In this example, the peripheral portion 83 is thinned by removing a part of the polysilicon layers 55 and 56 and the silicon nitride layers 64 and 65 that constitute the second laminated body 24. The peripheral portion 83 has a non-thinned portion 83a continuous with the covering portion 82, and a thinned portion 83b (see FIG. 1) surrounding the non-thinned portion 83a. In the thinned portion 83b, the polysilicon layers 55 and 56 and the silicon nitride layers 64 and 65, other than the polysilicon layer 54 provided directly on the first surface 11a, are removed.
[Functions and effects] [0056] As described above, in the Fabry-Perot interference filter 1, in the first laminated body 22 (reference laminated body), the silicon nitride layer 62 (first insulating layer) has the main body portion 62a (first main body portion) located on the polysilicon layer 52 (first low-resistance layer), the covering portion 62b (first covering portion) covering the outer edge 52c of the polysilicon layer 52, and the peripheral portion 62c (first peripheral portion) located outside the polysilicon layer 52 in a plan view. The main body portion 62a, the covering portion 62b, and the peripheral portion 62c are integrally formed. Thereby, the covering portion 62b and the peripheral portion 62c of the silicon nitride layer 62 can prevent the polysilicon layer 53 (second low-resistance layer) from coming into contact with the polysilicon layer 52, and suppress the occurrence of a leakage path due to the contact of the polysilicon layer 53 with the polysilicon layer 52. Therefore, according to the Fabry-Perot interference filter 1, the distance between the first mirror portion 31 and the second mirror portion 32 can be accurately adjusted.

In the Fabry-Perot interference filter 1, the first laminated body 22 includes the polysilicon layer 51 (third low-resistance layer) disposed on the substrate 11 side with respect to the polysilicon layer 52, and the silicon nitride layer 61 (second insulating layer) disposed between the polysilicon layer 51 and the polysilicon layer 52. The resistivity of the material constituting the polysilicon layer 51 is lower than the resistivity of the material constituting the silicon nitride layer 61. Even with such a configuration, the distance between the first mirror portion 31 and the second mirror portion 32 can be accurately adjusted.

In the Fabry-Perot interference filter 1, the covering portion 62b (first covering portion) covers the outer edge 52c of the polysilicon layer 52 (first low-resistance layer), the outer edge 61d of the silicon nitride layer 61 (second insulating layer), and the outer edge 51a of the polysilicon layer 51 (third low-resistance layer). Thereby, in addition to preventing the polysilicon layer 53 from coming into contact with the polysilicon layer 52, it is possible to prevent the polysilicon layer 52 from coming into contact with the polysilicon layer 51, thereby further suppressing the occurrence of a leakage path.

In the Fabry-Perot interference filter 1, the polysilicon layer 53 (second low-resistance layer) extends so as to cover the covering portion 62b (first covering portion) of the silicon nitride layer 62 (first insulating layer). Thereby, a step portion 22a formed in the first laminated body 22 can be made gentler as compared with a case where, for example, the polysilicon layer 53 is formed so as to cover only the main body portion 62a of the silicon nitride layer 62. By making the step portion 22a formed in the first laminated body 22 gentle, for example, it is possible to suppress the occurrence of application unevenness when applying a resist for etching, and to improve manufacturing stability. As a result, a decrease in yield can be suppressed.

In the Fabry-Perot interference filter 1, the polysilicon layer 52 (first low-resistance layer) is electrically connected to the compensation electrode 13 and the driving electrode 14. The polysilicon layer 53 (second low-resistance layer) is electrically connected to the driving electrode 12. In such a configuration, it is particularly important to suppress the occurrence of a leakage path between the polysilicon layer 52 and the polysilicon layer 53. According to the Fabry-Perot interference filter 1, as described above, the occurrence of a leakage path due to contact between the polysilicon layer 52 and the polysilicon layer 53 can be suppressed.

In the Fabry-Perot interference filter 1, the intermediate layer 23 has the defining portion 71 (third main body portion) located on the first laminated body 22, the covering portion 72 (third covering portion) covering an outer edge portion of the first laminated body 22, and the extending portion 73 (third peripheral portion) located outside the first laminated body 22 in a plan view, and the defining portion 71, the covering portion 72, and the extending portion 73 are integrally formed. Thereby, since the outer edge portion of the first laminated body 22 is covered by the intermediate layer 23, peeling of the first laminated body 22 can be suppressed.

In the Fabry-Perot interference filter 1, the second laminated body 24 has the main body portion 81 (fourth main body portion) located on the intermediate layer 23, the covering portion 82 (fourth covering portion) covering an outer end surface 73a of the intermediate layer 23, and the peripheral portion 83 (fourth peripheral portion) located outside the intermediate layer 23 in a plan view, and the main body portion 81, the covering portion 82, and the peripheral portion 83 are integrally formed. Thereby, since the outer end surface 73a of the intermediate layer 23 is covered by the second laminated body 24, peeling of the first laminated body 22 and the intermediate layer 23 can be suppressed.

In the Fabry-Perot interference filter 1, the polysilicon layer 52 (first low-resistance layer) and the polysilicon layer 53 (second low-resistance layer) are formed of polysilicon, and the silicon nitride layer 62 (first insulating layer) is formed of silicon nitride. Thereby, desired mirror characteristics can be realized.

### [First Modification]

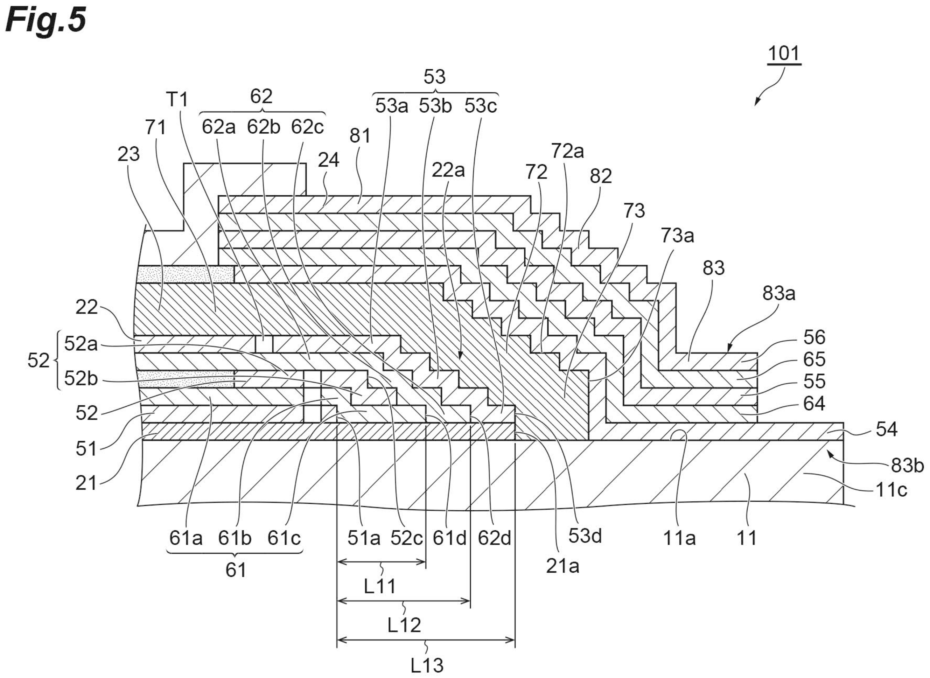

Although one embodiment of the present disclosure has been described above, the present disclosure is not limited to the above embodiment. FIG. 5 is an enlarged cross-sectional view showing a part of a Fabry-Perot interference filter according to a first modification. A Fabry-Perot interference filter 101 according to the first modification is different from the Fabry-Perot interference filter 1 of the above embodiment in that the silicon nitride layer 61 covers an outer edge 51a of the polysilicon layer 51. In the first laminated body 22 in the first modification, the polysilicon layer 51 corresponds to the first low-resistance layer, not the third low-resistance layer. In this case, the silicon nitride layer 61 corresponds to the first insulating layer, the polysilicon layer 52 corresponds to the second low-resistance layer, the silicon nitride layer 62 corresponds to the third insulating layer, and the polysilicon layer 53 corresponds to the fourth low-resistance layer.

The silicon nitride layer 61 in the first modification has a main body portion 61a (first main body portion), a covering portion 61b (first covering portion), and a peripheral portion 61c (first peripheral portion). The main body portion 61a, the covering portion 61b, and the peripheral portion 61c are integrally formed so as to be continuous with each other. The main body portion 61a is located on the polysilicon layer 51 and overlaps with the entire polysilicon layer 51 in a plan view. The covering portion 61b is continuous with the main body portion 61a at the outer edge 51a of the polysilicon layer 51. The covering portion 61b covers the outer edge 51a of the polysilicon layer 51 and reaches the antireflection layer 21. The peripheral portion 61c is continuous with an end portion of the covering portion 61b on the substrate 11 side, and extends outward from the covering portion 61b along the first surface 11a of the substrate 11. The peripheral portion 61c is located outside the polysilicon layer 51 in a plan view. The covering portion 61b and the peripheral portion 61c are formed in a frame shape (a rectangular frame shape in this example) so as to surround the main body portion 61a in a plan view. The width L11 of one side of the covering portion 61b and the peripheral portion 61c in a plan view is, for example, about 2 µm. The width L11 is set to, for example, about 4 to 200 times the thickness of the main body portion 61a (in this example, about 0.01 µm to 0.5 µm).

The polysilicon layer 52 has a main body portion 52a and a covering portion 52b. The main body portion 52a and the covering portion 52b are integrally formed so as to be continuous with each other. The main body portion 52a is located on the main body portion 61a of the silicon nitride layer 61 and overlaps with the entire main body portion 61a in a plan view. The covering portion 52b extends outward from the main body portion 52a along the first surface 11a of the substrate 11. The covering portion 52b covers the covering portion 61b of the silicon nitride layer 61 and is located on the peripheral portion 61c, overlapping with the peripheral portion 61c in a plan view.

In the silicon nitride layer 62 in the first modification, the main body portion 62a corresponds to a second main body portion, the covering portion 62b corresponds to a second covering portion, and the peripheral portion 62c corresponds to a second peripheral portion. The peripheral portion 62c is in contact with the peripheral portion 61c. The width L12 of one side of the covering portion 62b and the peripheral portion 62c in a plan view is, for example, about 6 µm. The width L12 is set to, for example, about 12 to 600 times the thickness of the main body portion 62a (in this example, about 0.01 µm to 0.5 µm).

The polysilicon layer 53 extends so as to cover the silicon nitride layer 62. In the polysilicon layer 53, a width L13 of one side of the covering portion 53b and the peripheral portion 53c in a plan view is, for example, about 8 µm. The width L13 is, for example, set to about 16 to 800 times the thickness of the main body portion 53a (in this example, about 0.01 µm to 0.5 µm). Note that a step portion 22a is formed at an outer edge portion of the first laminated body 22 by the peripheral portion 61c of the silicon nitride layer 61, the covering portion 62b and the peripheral portion 62c of the silicon nitride layer 62, and the covering portion 53b and the peripheral portion 53c of the polysilicon layer 53.

With the Fabry-Perot interference filter 101 of the first modification, similarly to the Fabry-Perot interference filter 1 according to the above embodiment, the distance between the first mirror portion 31 and the second mirror portion 32 can be accurately adjusted.

Further, in the Fabry-Perot interference filter 101, the silicon nitride layer 62 (third insulating layer) has the main body portion 62a (second main body portion) located on the polysilicon layer 52, the covering portion 62b (second covering portion) covering an outer edge 52c of the polysilicon layer 52, and the peripheral portion 62c (second peripheral portion) located outside the polysilicon layer 52 in a plan view, and the main body portion 62a, the covering portion 62b, and the peripheral portion 62c are integrally formed. Thereby, for example, it is possible to prevent the polysilicon layer 53 laminated on the silicon nitride layer 62 from coming into contact with the polysilicon layer 52, thereby further suppressing the occurrence of a leakage path.

Further, in the Fabry-Perot interference filter 101, the peripheral portion 62c is in contact with the peripheral portion 61c. Thereby, contact between the polysilicon layers 52 and 53 can be more reliably prevented, and the occurrence of a leakage path can be further suppressed.

Further, in the Fabry-Perot interference filter 101, the polysilicon layer 53 (fourth low-resistance layer) is disposed on a side opposite to the substrate with respect to the silicon nitride layer 62. In this case, the covering portion 62b and the peripheral portion 62c of the silicon nitride layer 62 can prevent the polysilicon layer 53 from coming into contact with the polysilicon layer 52.

Further, in the Fabry-Perot interference filter 101, the polysilicon layer 53 extends so as to cover the silicon nitride layer 62. Thereby, a step portion 22a formed in the first laminated body 22 can be made gentler. By making the step portion 22a formed in the first laminated body 22 gentle, for example, it is possible to suppress the occurrence of application unevenness when applying a resist for etching, and to improve manufacturing stability.

In the Fabry-Perot interference filter 101, the polysilicon layer 52 (second low-resistance layer) is electrically connected to the compensation electrode 13 and the driving electrode 14. Even in such a configuration, it is important to suppress the occurrence of a leakage path between the polysilicon layer 51 and the polysilicon layer 52. For example, if a leakage path occurs between the polysilicon layer 51 and the polysilicon layer 52, the compensation electrode 13 and the driving electrode 14 become electrically continuous with the polysilicon layer 51. In this case, the size of the region where the compensation electrode 13 and the driving electrode 14 are electrically continuous in the Fabry-Perot interference filter 101 becomes larger than planned, which may reduce the accuracy of controlling the distance between the first mirror portion 31 and the second mirror portion 32 by applying voltage to the driving electrode 12 and the driving electrode 14. In contrast, according to the Fabry-Perot interference filter 101, as described above, the occurrence of a leakage path due to contact between the polysilicon layer 51 and the polysilicon layer 52 can be suppressed, and the occurrence of such a situation can be suppressed.

### [Second Modification]

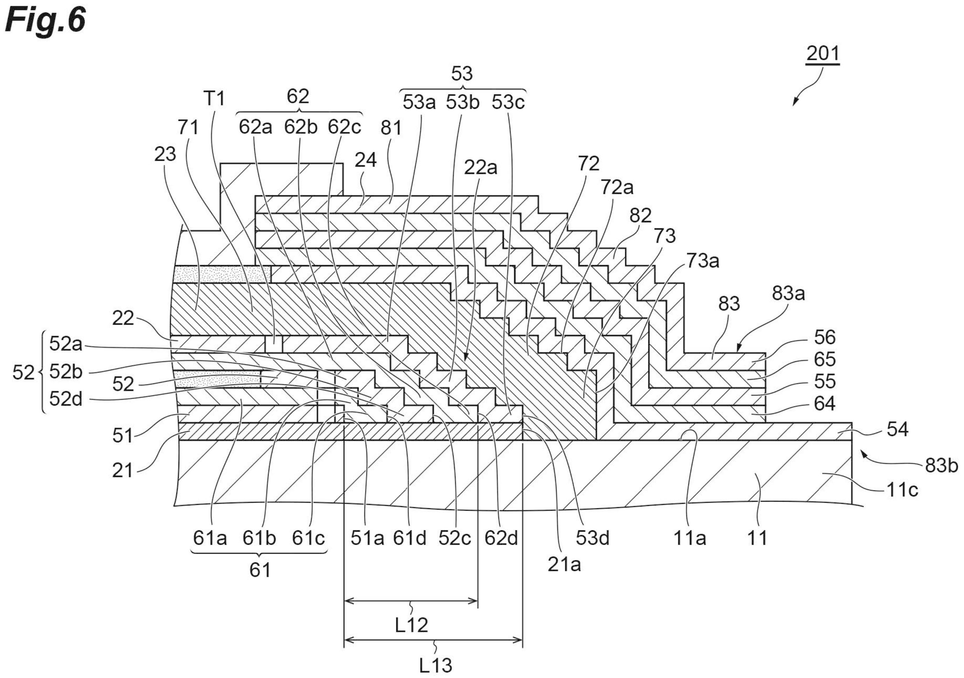

FIG. 6 is an enlarged cross-sectional view showing a part of a Fabry-Perot interference filter according to a second modification. A Fabry-Perot interference filter 201 according to the second modification is different from the Fabry-Perot interference filter 101 of the first modification described above in that the peripheral portion 62c is not in contact with the peripheral portion 61c.

In the Fabry-Perot interference filter 201, the polysilicon layer 52 further has a peripheral portion 52d in addition to the main body portion 52a and the covering portion 52b. The main body portion 52a, the covering portion 52b, and the peripheral portion 52d are integrally formed so as to be continuous with each other. The main body portion 52a is located on the main body portion 61a of the silicon nitride layer 61 and overlaps with the entire main body portion 61a in a plan view. The covering portion 52b covers the covering portion 61b and the peripheral portion 61c of the silicon nitride layer 61 and reaches the antireflection layer 21. The peripheral portion 52d is continuous with an end portion of the covering portion 52b on the substrate 11 side, and extends outward from the covering portion 52b along the first surface 11a of the substrate 11. The peripheral portion 52d is located outside the main body portion 61a and the covering portion 61b of the silicon nitride layer 61 when viewed from a direction perpendicular to the first surface 11a. The peripheral portion 52d is located between the peripheral portion 62c of the silicon nitride layer 62 and the peripheral portion 61c of the silicon nitride layer 61. Therefore, unlike in the first modification, the peripheral portion 62c is not in contact with the peripheral portion 61c.

With the Fabry-Perot interference filter 201 of the second modification, similarly to the Fabry-Perot interference filter 1 according to the above embodiment, the distance between the first mirror portion 31 and the second mirror portion 32 can be accurately adjusted.

### [Third Modification]

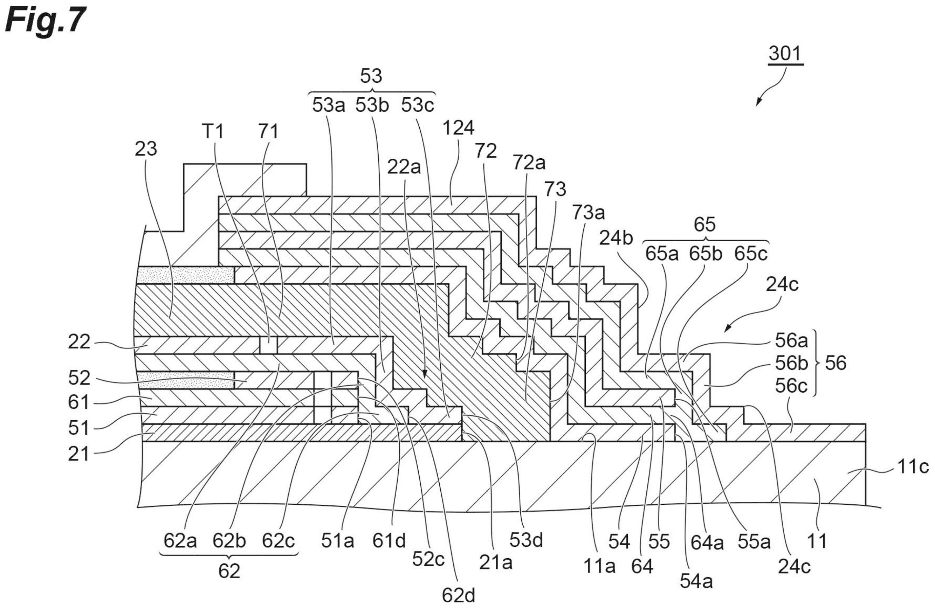

FIG. 7 is an enlarged cross-sectional view showing a part of a Fabry-Perot interference filter according to a third modification. A Fabry-Perot interference filter 301 according to the third modification is different from the Fabry-Perot interference filter 1 of the above embodiment in that it has a second laminated body 124 in which a structure similar to that of the first laminated body 22 is applied to an edge portion, instead of the second laminated body 24. In the second laminated body 124, a polysilicon layer 54, a silicon nitride layer 64, a polysilicon layer 55 (fifth low-resistance layer), a silicon nitride layer 65 (fourth insulating layer), and a polysilicon layer 56 (sixth low-resistance layer) are laminated on the intermediate layer 23 and the first surface 11a of the substrate 11 in this order from the lower side. That is, the polysilicon layer 55 (fifth low-resistance layer) is disposed on an upper side with respect to the polysilicon layer 54. The polysilicon layer 56 (sixth low-resistance layer) is disposed on an upper side with respect to the polysilicon layer 55 (fifth low-resistance layer). The silicon nitride layer 64 is disposed between the polysilicon layer 54 and the polysilicon layer 55 (fifth low-resistance layer). The silicon nitride layer 65 (fourth insulating layer) is disposed between the polysilicon layer 55 (fifth low-resistance layer) and the polysilicon layer 56 (sixth low-resistance layer).

The silicon nitride layer 65 has a main body portion 65a (fifth main body portion), a covering portion 65b (fifth covering portion), and a peripheral portion 65c (fifth peripheral portion). The main body portion 65a, the covering portion 65b, and the peripheral portion 65c are integrally formed so as to be continuous with each other. The main body portion 65a is located on the polysilicon layer 55 and overlaps with the entire polysilicon layer 55 in a plan view. The covering portion 65b is continuous with the main body portion 65a at an outer edge 55a of the polysilicon layer 55. The covering portion 65b covers the outer edge 55a of the polysilicon layer 55, an outer edge 64a of the silicon nitride layer 64, and an outer edge 54a of the polysilicon layer 54, and reaches the first surface 11a. The peripheral portion 65c is continuous with an end portion of the covering portion 65b on the substrate 11 side, and extends outward from the covering portion 65b along the first surface 11a of the substrate 11. The peripheral portion 65c is located outside the polysilicon layer 55 in a plan view.

The polysilicon layer 56 has a main body portion 56a, a covering portion 56b, and a peripheral portion 56c. The main body portion 56a, the covering portion 56b, and the peripheral portion 56c are integrally formed so as to be continuous with each other. The main body portion 56a is located on the silicon nitride layer 65 and overlaps with the main body portion 65a of the silicon nitride layer 65 in a plan view. The covering portion 56b covers the covering portion 65b and the peripheral portion 65c and reaches the first surface 11a. The peripheral portion 56c is continuous with an end portion of the covering portion 56b on the substrate 11 side, and extends outward from the covering portion 56b along the first surface 11a of the substrate 11. The peripheral portion 56c is located outside the silicon nitride layer 65 in a plan view. The peripheral portion 56c is located on the first surface 11a at the outer edge portion 11c. An outer edge of the peripheral portion 56c coincides with the outer edge of the substrate 11 in a plan view. The polysilicon layer 56 covers the main body portion 65a, the covering portion 65b, and the peripheral portion 65c. The covering portion 56b and the peripheral portion 56c are formed in a frame shape (a rectangular frame shape in this example) so as to surround the main body portion 56a in a plan view. Note that a step portion 24c is formed by the peripheral portion 65c of the silicon nitride layer 65, and the covering portion 56b and the peripheral portion 56c of the polysilicon layer 56.

With the Fabry-Perot interference filter 301 of the third modification, similarly to the Fabry-Perot interference filter 1 according to the above embodiment, the distance between the first mirror portion 31 and the second mirror portion 32 can be accurately adjusted. Further, in the Fabry-Perot interference filter 301, the covering portion 65b (fifth covering portion) and the peripheral portion 65c (fifth peripheral portion) of the silicon nitride layer 65 (fourth insulating layer) can prevent the polysilicon layer 55 from coming into contact with the polysilicon layer 56, and suppress the occurrence of a leakage path due to the contact of the polysilicon layer 56 with the polysilicon layer 55.

The present disclosure is not limited to the above-described embodiment and each modification. For example, for the material and shape of each component, various materials and shapes can be adopted, not limited to the materials and shapes described above.

In the description of the third modification described above, the first laminated body 22 has been described as being regarded as the reference laminated body, but the second laminated body 124 can also be regarded as the reference laminated body. In this case, the second laminated body 124 includes: a polysilicon layer 55 (first low-resistance layer); a polysilicon layer 56 (second low-resistance layer) disposed on an upper side with respect to the polysilicon layer 55; and a silicon nitride layer 65 (first insulating layer) disposed between the polysilicon layer 55 and the polysilicon layer 56. The resistivity of the material constituting the polysilicon layer 55 and the polysilicon layer 56 is lower than the resistivity of the material constituting the silicon nitride layer 65. The silicon nitride layer 65 includes: a main body portion 65a (first main body portion) located on the polysilicon layer 55; a covering portion 65b (first covering portion) covering an outer edge 55a of the polysilicon layer 55; and a peripheral portion 65c (first peripheral portion) located outside the polysilicon layer 55 when viewed from a plan view. The main body portion 65a, the covering portion 65b, and the peripheral portion 65c are integrally formed. Further, the first laminated body 22 includes: a polysilicon layer 52 (fifth low-resistance layer); a polysilicon layer 53 (sixth low-resistance layer) disposed on an upper side with respect to the polysilicon layer 52; and a silicon nitride layer 62 (fourth insulating layer) disposed between the polysilicon layer 52 and the polysilicon layer 53. The resistivity of the material constituting the polysilicon layer 52 and the polysilicon layer 53 is lower than the resistivity of the material constituting the silicon nitride layer 62. The silicon nitride layer 62 includes: a main body portion 62a (fifth main body portion) located on the polysilicon layer 52; a covering portion 62b (fifth covering portion) covering an outer edge of the polysilicon layer 52; and a peripheral portion 62c (fifth peripheral portion) located outside the polysilicon layer 52 when viewed from a plan view. The main body portion 62a, the covering portion 62b, and the peripheral portion 62c are integrally formed.

Further, in the third modification, when the second laminated body 124 is regarded as the reference laminated body, the silicon nitride layer 62 of the first laminated body 22 need not have the covering portion 62b and the peripheral portion 62c, and may have only the main body portion 62a. The polysilicon layer 53 of the first laminated body 22 need not have the covering portion 53b and the peripheral portion 53c, and may have only the main body portion 53a.

In the above-described embodiment and each modification, the first laminated body 22 need not have the polysilicon layer 51 and the silicon nitride layer 61, and may have only the polysilicon layers 52 and 53 and the silicon nitride layer 62. Alternatively, the first laminated body 22 need not have the polysilicon layer 53, and may have only the polysilicon layers 51 and 52 and the silicon nitride layers 61 and 62. The first laminated body 22 may have only the polysilicon layers 51 and 52 and the silicon nitride layer 61. The intermediate layer 23 need not have the covering portion 72 and the extending portion 73, and may have only the defining portion 71. The second laminated body 24 need not have the covering portion 82 and the peripheral portion 83. The polysilicon layer 53 need not extend so as to cover the covering portion 62b of the silicon nitride layer 62, and may extend so as to cover only the main body portion 62a.

In the above-described embodiment and each modification, the polysilicon layers 51, 52, and 53 need not be electrically connected to the compensation electrode 13 and the driving electrode 14. That is, it is not necessary that both the first low-resistance layer and the second low-resistance layer are electrically connected to an electrode. The compensation electrode 13 and the driving electrode 14 may be formed in a layer other than the polysilicon layer 53 (for example, the polysilicon layer 51 or 52).

In the above-described embodiment and each modification, the low-resistance layers of the first laminated body 22 and the second laminated body 24 is formed of the polysilicon layer 50, and the insulating layer is formed of the silicon nitride layer 60, but the material constituting the low-resistance layer and the insulating layer is not limited as long as the resistivity of the material constituting the low-resistance layer is lower than the resistivity of the material constituting the insulating layer. For example, the low-resistance layer of the first laminated body 22 and the second laminated body 24 may be a layer formed of aluminum, copper, titanium, chromium, cobalt, nickel, ruthenium, niobium, molybdenum, tungsten, gold, silver, carbon, or the like, or may be a layer formed of a compound containing them. The insulating layers of the first laminated body 22 and the second laminated body 24 may be a layer formed of silicon oxide, titanium oxide, tantalum oxide, zirconium oxide, magnesium fluoride, aluminum oxide, calcium fluoride, silicon, germanium, zinc sulfide, or the like.

In the above-described embodiment, the covering portion 62b only needs to cover the outer edge 52c of the polysilicon layer 52, and need not cover the outer edge 61d of the silicon nitride layer 61 and the outer edge 51a of the polysilicon layer 51.

### Reference Signs List

1, 101, 201, 301... Fabry-Perot interference filter, 11... substrate, 22... first laminated body (reference laminated body), 22a... step portion, 23... intermediate layer, 24, 124... second laminated body, 31... first mirror portion, 32... second mirror portion, S... gap, 51... polysilicon layer (third low-resistance layer) (first low-resistance layer), 51a... outer edge, 52... polysilicon layer (first low-resistance layer) (second low-resistance layer), 52c... outer edge, 53... polysilicon layer (second low-resistance layer) (fourth low-resistance layer), 55... polysilicon layer (fifth low-resistance layer), 56... polysilicon layer (sixth low-resistance layer), 61... silicon nitride layer (second insulating layer) (first insulating layer), 61a... main body portion (first main body portion), 61b... covering portion (first covering portion), 61c... peripheral portion (first peripheral portion), 61d... outer edge, 62... silicon nitride layer (first insulating layer) (second insulating layer), 62a... main body portion (first main body portion) (second main body portion), 62b... covering portion (first covering portion) (second covering portion), 62c... peripheral portion (first peripheral portion) (second peripheral portion), 65... silicon nitride layer (fourth insulating layer), 65a... main body portion (fifth main body portion), 65b... covering portion (fifth covering portion), 65c... peripheral portion (fifth peripheral portion), 71... defining portion (third main body portion), 72... covering portion (third covering portion), 73... extending portion (third peripheral portion), 81... main body portion (fourth main body portion), 82... covering portion (fourth covering portion), 83... peripheral portion (fourth peripheral portion), S... gap.

## Claims

1. A Fabry-Perot interference filter comprising:
a substrate;
a first laminated body including a first mirror portion disposed on the substrate;
a second laminated body including a second mirror portion that faces the first mirror portion with a gap interposed therebetween on a side opposite to the substrate with respect to the first mirror portion; and
an intermediate layer that defines the gap between the first laminated body and the second laminated body, wherein
a reference laminated body, which is one of the first laminated body and the second laminated body, includes: a first low-resistance layer; a second low-resistance layer disposed on a side opposite to the substrate with respect to the first low-resistance layer; and a first insulating layer disposed between the first low-resistance layer and the second low-resistance layer,
the resistivity of the material constituting the first low-resistance layer and the second low-resistance layer is lower than the resistivity of the material constituting the first insulating layer,
the first insulating layer includes: a first main body portion located on the first low-resistance layer; a first covering portion covering an outer edge of the first low-resistance layer; and a first peripheral portion located outside the first low-resistance layer when viewed from a direction perpendicular to the substrate, and
the first main body portion, the first covering portion, and the first peripheral portion are integrally formed.

2. The Fabry-Perot interference filter according to claim 1, wherein
the reference laminated body further includes: a third low-resistance layer disposed on a substrate side with respect to the first low-resistance layer; and a second insulating layer disposed between the first low-resistance layer and the third low-resistance layer, and
the resistivity of the material constituting the third low-resistance layer is lower than the resistivity of the material constituting the second insulating layer.

3. The Fabry-Perot interference filter according to claim 2, wherein the first covering portion covers the outer edge of the first low-resistance layer, the outer edge of the third low-resistance layer, and the outer edge of the second insulating layer.

4. The Fabry-Perot interference filter according to claim 2 or 3, wherein the second low-resistance layer extends so as to cover the first covering portion of the first insulating layer.

5. The Fabry-Perot interference filter according to claim 1, wherein
the reference laminated body further includes a third insulating layer disposed on a side opposite to the substrate with respect to the second low-resistance layer,
the third insulating layer includes: a second main body portion located on the second low-resistance layer; a second covering portion covering the outer edge of the second low-resistance layer; and a second peripheral portion located outside the second low-resistance layer when viewed from a direction perpendicular to the substrate, and
the second main body portion, the second covering portion, and the second peripheral portion are integrally formed.

6. The Fabry-Perot interference filter according to claim 5, wherein the second peripheral portion is in contact with the first peripheral portion.

7. The Fabry-Perot interference filter according to claim 5 or 6, wherein the reference laminated body further includes a fourth low-resistance layer disposed on a side opposite to the substrate with respect to the third insulating layer.

8. The Fabry-Perot interference filter according to any one of claims 1 to 7, wherein at least one of the first low-resistance layer and the second low-resistance layer is electrically connected to an electrode.

9. The Fabry-Perot interference filter according to any one of claims 1 to 8, wherein
the intermediate layer includes: a third main body portion located on the first laminated body; a third covering portion covering the outer edge of the first laminated body; and a third peripheral portion located outside the first laminated body when viewed from a direction perpendicular to the substrate, and
the third main body portion, the third covering portion, and the third peripheral portion are integrally formed.

10. The Fabry-Perot interference filter according to any one of claims 1 to 9, wherein
the reference laminated body is the first laminated body,
the second laminated body includes: a fourth main body portion located on the intermediate layer; a fourth covering portion covering the outer edge of the intermediate layer; and a fourth peripheral portion located outside the intermediate layer when viewed from a direction perpendicular to the substrate, and
the fourth main body portion, the fourth covering portion, and the fourth peripheral portion are integrally formed.

11. The Fabry-Perot interference filter according to any one of claims 1 to 10, wherein
the first low-resistance layer and the second low-resistance layer are formed of polysilicon, and
the first insulating layer is formed of silicon nitride.

12. The Fabry-Perot interference filter according to any one of claims 1 to 11, wherein
the other one of the first laminated body and the second laminated body includes: a fifth low-resistance layer; a sixth low-resistance layer disposed on a side opposite to the substrate with respect to the fifth low-resistance layer; and a fourth insulating layer disposed between the fifth low-resistance layer and the sixth low-resistance layer,
the resistivity of the material constituting the fifth low-resistance layer and the sixth low-resistance layer is lower than the resistivity of the material constituting the fourth insulating layer,
the fourth insulating layer includes: a fifth main body portion located on the fifth low-resistance layer; a fifth covering portion covering the outer edge of the fifth low-resistance layer; and a fifth peripheral portion located outside the fifth low-resistance layer when viewed from a direction perpendicular to the substrate, and
the fifth main body portion, the fifth covering portion, and the fifth peripheral portion are integrally formed.

13. The Fabry-Perot interference filter according to any one of claims 1 to 12, wherein the reference laminated body is the first laminated body.

14. The Fabry-Perot interference filter according to any one of claims 1 to 12, wherein the reference laminated body is the second laminated body.
